# EUROPÄISCHE PATENTSCHRIFT

(11) **EP 0 434 919 B1**
(45) Veröffentlichungstag und Bekanntmachung des Hinweises auf die Patenterteilung: **20.04.1994**
(21) Anmeldenummer: 90119888.7
(22) Anmeldetag: 17.10.1990
(51) Int. Cl.: G01M 1/04, G01M 1/06

(54) **Einrichtung zum Aufspannen von mit Bremsscheiben versehenen Rädern von Motorrädern auf die Welle einer Auswuchtmaschine**
Device for setting, on the shaft of a balancing machine, motorcycle wheels provided with brake discs
Dispositif pour fixer, sur l'arbre d'une machine d'équilibrage, des roues de motocycle pourvues de disques de freinage

(30) Priorität: 27.12.1989 DE 3943046
(43) Veröffentlichungstag der Anmeldung: 03.07.1991
(73) Patentinhaber: Warkotsch, Horst, D-30938 Burgwedel (DE)
(72) Erfinder: Warkotsch, Horst, D-30938 Burgwedel (DE)
(74) Vertreter: Leine, Sigurd, Dipl.-Ing.

(56) Entgegenhaltungen:
- EP-A- 0 056 544
- FR-A- 2 311 289

## Beschreibung

Die Erfindung betrifft eine Einrichtung zum Aufspannen von mit Bremsscheiben versehenen Rädern von Motorrädern auf die Welle einer Auswuchtmaschine.

Durch den Prospekt "Motorrad-Spannvorrichtungen und Zubehör" der Firma HAWEKA Auswuchttechnik Horst Warkotsch, Schulze-Delitzsch-Str. 21, D-3006 Burgwedel 1, ist eine Einrichtung der betreffenden Art bekannt, bei der die Mittel zur zentrischen Halterung der Räder durch eine Stange gebildet sind, die eine Verlängerung der Welle der Auswuchtmaschine bildet. Zur Zentrierung von Rädern unterschiedlicher Lagerinnendurchmesser sind auf der Stange zwei mit den Kegelspitzen aufeinander zu gerichtete Kegel verschieblich angeordnet, wobei der der Auswuchtmaschine benachbarte Kegel eine axiale Anlage bildet, gegen die das Rad über den anderen Kegel mittels einer Rändelmutter gespannt wird, die auf ein Gewindeende der Stange aufgeschraubt ist. Zur drehfesten Verbindung der Räder mit der Welle dient ein flügelartiges Teil, das mit der Welle der Auswuchtmaschine verbunden ist und in gleichen radialen Abständen von der Welle Grundplatten aufweist, die um Achsen schwenkbar sind, die parallel zur Welle der Auswuchtmaschine verlaufen. In gleichen Abständen von den Schwenkachsen sind an den Grundplatten Stangen angeordnet, die in die Speichen eines aufgespannten Rades greifen und so eine drehfeste Verbindung desselben mit der Welle der Auswuchtmaschine herstellen. Durch Drehung der Grundplatten kann ein Spiel bei der Mitnahme vermieden werden.

Ein Nachteil dieser bekannten Einrichtung besteht darin, daß sie eine einwandfreie Ermittlung nur der statischen Unwucht ermöglicht, weil bei einer Rotation der Welle der Auswuchtmaschine eine Verbindung derselben mit dem auszuwuchtenden Rad nur über dessen Drehlager gebildet ist, deren Spiel bei der Rotation zu unerwünschten Bewegungen des Rades in bezug zu der Welle führt, die eine exakte Messung unmöglich machen. Auch ist kein genauer Planverlauf gegeben, so daß auch dadurch die Meßergebnisse bei einer dynamischen Auswuchtung verfälscht werden würden.

Es ist eine Einrichtung zum Aufspannen von Motorradrädern auf eine Auswuchtmaschine bekannt, die von der Firma Hofmann Werkstatt-Technik GmbH, D-6102 Pfungstadt, Wernervon-Siemens-Str. 2, unter der Bezeichnung "geodyna 24m" vertrieben wird. Bei dieser Einrichtung wird die Wuchtmaschinenwelle durch zwei koaxiale Wellen ersetzt, und zwar eine außenliegende, drehende Welle und durch eine innere, stehende Welle. Die Lager der Räder werden wie bei der zuvorbeschriebenen Einrichtung über Mitnehmer angetrieben. Da die Mittelachse in den Lagern stehenbleibt und die Drehung über eine starre, stehende Achse erfolgt, können sich die Lager nicht störend auf die Messung auswirken. Diese bekannte Einrichtung ist jedoch sehr teuer und und aufwendig. Da Wuchtmaschinen nicht nur für Räder von Motorrädern, sondern immer auch für Kraftfahrzeugräder benutzt werden, muß eine sehr komplizierte und zeitaufwendige Umrüstung erfolgen.

Durch FR-A-2311289 ist eine Einrichtung zum Aufspannen von Kraftfahrzeugrädern auf die Welle einer Auswuchtmaschine bekannt. Die Vorrichtung weist einen Flansch auf, an dem sich vier in ihrem Radius verstellbare Schraubbolzen befinden. Auf diese Schraubbolzen wird ein auszuwuchtendes Kraftfahrzeugrad mit seinen vier in seiner Felge befindlichen Befestigungslöchern gesteckt, wonach von aussen her wie bei einem Kraftfahrzeug Muttern aufgeschraubt und gegen die Felge gezogen werden. Da die Räder von Motorrädern solche Befestigungslöcher nicht aufweisen, ist diese bekannte Vorrichtung für das Aufspannen von Rädern von Motorrädern auf die Welle einer Auswuchtmaschine ungeeignet.

Durch EP-A-0056554 ist eine Vorrichtung zum Aufspannen eines Kraftfahrzeugrades auf die Welle einer Auswuchtmaschine bekannt. Auf der Welle der Auswuchtmaschine befindet sich ein verschieblicher, zum Ende der Welle sich verjüngender und in diese Richtung durch eine Feder vorgespannter Konus, der zum Zwecke der Mittenzentrierung beim Aufspannen eines Kraftfahrzeugrades in ein mittleres Zentrierloch der Felge des Kraftfahrzeugrades eingreift. Zur Befestigung der Felge liegt diese mit ihrer Rückseite an einem Anlageflansch an und wird mittels einer Spannschraube gegen den Anlageflansch festgezogen. Derartige Anlageflächen besitzen die Felgen von Kraftfahrzeugrädern nicht, so daß diese bekannte Vorrichtung zum Aufspannen eines Rades eines Motorrades auf der Welle einer Auswuchtmaschine ungeeignet ist.

Der Erfindung liegt die Aufgabe zugrunde, eine Einrichtung der betreffenden Art zum Aufspannen von mit Bremsscheiben versehenen Rädern von Motorrädern auf die Welle einer Auswuchtmaschine zu schaffen, die einfach im Aufbau und leicht handzuhaben ist und eine schnelle Umrüstung der Auswuchtmaschine zwischen Autorädern und Motorradrädern ermöglicht.

Die der Erfindung zugrundeliegende Aufgabe wird durch die im Kennzeichen des Anspruchs 1 angegebene Lehre gelöst.

Der Grundgedanke der Erfindung besteht darin, die Radlager nur für eine anfängliche Zentrierung zu verwenden und für die spiel- und taumelfreie Einstellung die Fläche der Bremsscheibe auszunutzen, wozu diese beim axialen Festspannen gegen in einer gemeinsamen radialen Ebene liegende Anlageflächenteile oder eine vorzugsweise ringförmige, in einer radialen Ebene liegende Anlagefläche gezogen wird. Da diese Anlagefläche einen relativ großen radialen Abstand von der Welle der Auswuchtmaschine hat, ist eine sehr exakte Anlage und Ausrichtung gegenüber Taumelbewegungen sichergestellt. Entscheidend ist aber vor allem, daß diese Anlage nicht über die Lager des Rades erfolgt, so daß bei einer Rotation zu dynamischen Auswuchtzwecken Lagerspiel und Lagerschwingungen sich nicht störend auf das Meßergebnis auswirken können. Je nach dem Reibungskoeffizienten der Anlageflächenteile bzw. der Ringfläche kann auf diese Weise sogar eine Mitnahme des Rades erfolgen. Die Einrichtung ist verhältnismäßig einfach und ermöglicht auch eine leichte Umrüstung auf eine Spannvorrichtung für Autoräder.

Die Anlageflächenteile können aus zwei diametral in gleichem radialem Abstand gegenüberliegenden Anlageteilen gebildet sein, welche radial verstellbar von einem flügelförmigen Teil gehalten sein können, das vorzugsweise lösbar mit der Welle der Auswuchtmaschine verbunden ist. Der Grundaufbau ist also derselbe wie bei der eingangs beschriebenen, bekannten Einrichtung, wobei zusätzlich die besonderen Anlageflächen bzw. Flächenteile vorhanden sind. Als Mitnehmer können zusätzlich wie bei der bekannten Einrichtung auch axial gerichtete Mitnehmerstangen vorgesehen sein.

Die Mittel zum axialen Festspannen sind durch Klemmbacken gebildet, die eine Bremsscheibe eines aufgespannten Rades hintergreifen und in Richtung auf die Anlageflächen fest einspannen. Das bedeutet, daß im aufgespannten Zustand das Rad nur noch über die Bremsscheibe völlig spiel- und rüttelfrei gehalten ist. Das Festziehen der Klemmbacken ist besonders zweckmäßig durch Verwendung einer Schraubverbindung gemäß Anspruch 5 und der Weiterbildung davon in Anspruch 6.

Das axiale Festspannen kann zweckmäßigerweise auch durch die Weiterbildung gemäß Anspruch 7 erfolgen. Es handelt sich dabei um eine Festspannung über eine zentrale Verschraubung, wobei besonders das Merkmal hervorzuheben ist, daß auf der Stange zwischen Radnabe und Mutter bzw. Rändelmutter ein Zwischenstück angeordnet ist, das radial außerhalb der Lager an der Nabe des Rades anliegt. Das bedeutet, daß nicht nur die axiale Anlage, sondern auch das axiale Festspannen frei von den Lagern des Rades erfolgt.

Anhand der Zeichnungen soll die Erfindung näher erläutert werden.
- Fig. 1: zeigt einen axialen Schnitt durch eine Einrichtung mit aufgespanntem Rad eines Motorrades, die nicht in den Schutzbereich des Anspruchs 1 fällt, und
- Fig. 2: zeigt ein Ausführungsbeispiel der Erfindung

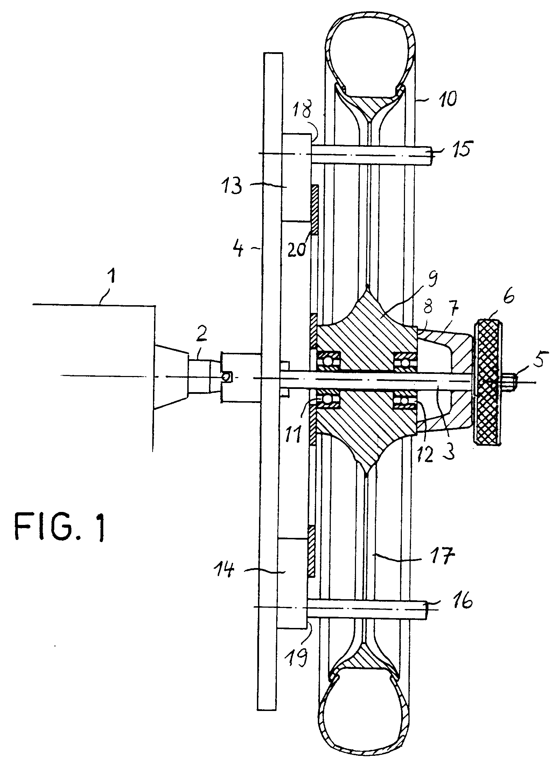

Fig. 1 zeigt einen kleinen Teil einer Auswuchtmaschine 1 mit einer Welle 2, an der als Verlängerung eine Stange 3 durch Einschrauben und außerdem ein flügelartiges Teil 4 befestigt ist. Auf ein Gewindeende 5 der Stange 3 ist eine Rändelmutter 6 aufgeschraubt, die gegen ein topfartiges Zwischenstück 7 festziehbar ist, das mit Schultern 8 gegen eine Nabe 9 eines Rades 10 eines Motorrades drückt. In der Nabe 9 befinden sich Kugellager 11 und 12, mit denen das Rad 10 auf die Stange 3 aufgesteckt ist, so wie das Aufstecken auf eine Achse eines Motorrades erfolgt.

An dem flügelartigen Teil 4 befinden sich in gleichem Radialabstand radial in nicht näher dargestellter Weise verstellbare Anlageteile 13 und 14, die scheibenförmig ausgebildet sind und axial gerichtete Stangen 15 und 16 aufweisen, die zwischen Speichen 17 des Rades 10 greifen.

Dem Rad 10 zugewandt befinden sich an den Anlageteilen 13 und 14 Anlageflächenteile 18 und 19, an die eine Bremsscheibe 20, die fest mit der Nabe 9 des Rades 10 verbunden ist, anliegt.

Bei Benutzung der in Fig. 1 gezeigten Einrichtung wird zunächst das flügelartige Teil 4 auf die Welle 2 der Auswuchtmaschine 1 aufgesetzt und die Stange 3 befestigt, beispielsweise durch Einschrauben in eine Gewindebohrung in der Welle 2. Dann wird das Rad 10 mit seinen Lagern 11 und 12 auf die Stange 3 aufgeschoben, bis die Bremsscheibe 20 an den Anlageflächenteilen 18 und 19 anliegt. Danach wird das topfartige Teil 7 auf die Stange 3 aufgeschoben, die Rändelmutter 6 auf das Gewindeende 5 aufgeschraubt und festgezogen, bis die Bremscheibe 20 mit ausreichender Kraft an den Anlageflächenteilen 18 und 19 anliegt. Durch diese Anlage ist eine spiel- und vibrationsfreie Verbindung des Rades 12 mit der Welle 2 der Auswuchtmaschine 1 hergestellt.

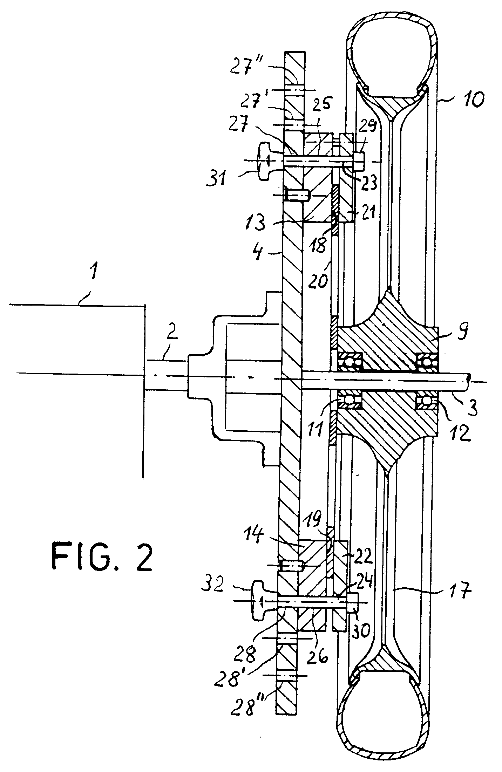

Bei dem in Fig. 2 gezeigten Ausführungsbeispiel der Erfindung sind gleiche oder sich entsprechende Teile mit den gleichen Bezugsziffern wie in Fig. 1 versehen. Der Unterschied besteht darin, daß im Bereich der Anlageflächenteile 18 und 19 Klemmbacken 21 und 22 vorgesehen sind, die Bohrungen 23 und 24 aufweisen, die mit Bohrungen 25 und 26 in den Anlageteilen 13 und 14 und Bohrungen 27 und 28 in dem flügelartigen Teil 14 fluchten. Durch diese Bohrungen 23, 25, 27 bzw. 24, 26, 28 sind Bolzenschrauben 29 und 30 gesteckt, deren Gewindeenden auf der dem Rad 10 abgewandten Seite des flügelartigen Teils 4 vorstehen und auf die jeweils Handmuttern 31 und 32 aufgeschraubt sind, mit denen die Klemmbacken 21 und 22 gegen die Bremsscheibe 20 und diese gegen die Anlageflächenteile 18 und 19 ziehbar sind, so daß die Bremsscheibe 20 fest eingespannt ist.

Zur Sicherung der Klemmbacken 21 und 22 gegen Verdrehen sind Paßstifte 33 vorgesehen, von denen in der Zeichnung in Fig. 2 nur der obere sichtbar ist.

In dem flügelartigen Teil 4 sind zusätzliche Bohrungen 27' und 22' sowie 28' und 28'' vorgesehen, so daß eine radiale Verstellung der Anlageteile 13 und 14 sowie der zugeordneten Klemmbacken 21 und 22 möglich ist, so daß eine Anpassung an Bremsscheiben 20 unterschiedlicher Durchmesser erfolgen kann.

## Patentansprüche

1. Einrichtung zum Aufspannen von mit Bremsscheiben versehenen Rädern von Motorrädern auf die Welle einer Auswuchtmaschine, mit Mitteln zur zentrischen Halterung der Räder, mit Mitteln zum axialen Festspannen der Räder gegen eine axiale Anlage und mit Mitteln zur drehfesten Verbindung der Räder mit der Welle der Auswuchtmaschine, **dadurch gekennzeichnet**, daß die axiale Anlage durch wenigstens drei in einer gemeinsamen radialen Ebene über den Umfang verteilt liegende Anlageflächenteile (18, 19) oder eine vorzugsweise ringförmige, in einer radialen Ebene liegende Anlagefläche gebildet ist und daß die Mittel zum axialen Festspannen durch Klemmbacken (21, 22) gebildet sind, die in Richtung auf die Anlageflächenteile (18, 19) festspannbar sind und zusammen mit diesen ein radial nach innen offenes Maul (18, 19, 21, 22, 23, 24) zur Aufnahme des Randes einer Bremsscheibe (20) eines aufgespannten Rades (10) bildet.

2. Einrichtung nach Anspruch 1, **dadurch gekennzeichnet**, daß die Anlageflächenteile (18, 19) an zwei diametral im gleichen radialen Abstand gegenüberliegenden Anlageteilen (13, 14) gebildet sind.

3. Einrichtung nach Anspruch 2, **dadurch gekennzeichnet**, daß die Anlageteile (13, 14) radial verstellbar von einem flügelförmigen Teil (4) gehalten sind, das vorzugsweise lösbar mit der Welle (2) der Auswuchtmaschine (1) verbunden ist.

4. Einrichtung nach Anspruch 3, **dadurch gekennzeichnet**, daß die Anlageteile (13, 14) scheibenförmig sind und jeweils eine axial gerichtete Mitnehmerstange (15, 16) zum Eingreifen zwischen die Speichen (17) eines Rades (10) aufweisen, wobei die Mitnehmerstangen (15, 16) gleiche radiale Abstände zur Achse (2) der Auswuchtmaschine (1) haben.

5. Einrichtung nach Anspruch 3, **dadurch gekennzeichnet**, daß die Klemmbacken (21, 22) Bohrungen aufweisen, die mit Bohrungen (25, 27; 26, 28) in den Anlagenteilen (13, 14) und dem flügelförmigen Teil (4) fluchten und durch die Schraubbolzen (19, 30) gesteckt sind, die an ihren Gewindeenden, die auf der der Aufspannseite abgewandten Seite des flügelförmigen Teiles (4) vorstehen, Handmuttern (31, 32) aufweisen, mit denen über die Schraubbolzen (29, 30) die Klemmbacken (21, 22) gegen die Anlageflächenteile (18, 19) spannbar sind.

6. Einrichtung nach Anspruch 5, **dadurch gekennzeichnet**, daß die Klemmbacken (21, 22) jeweils durch Paßstifte (33) gegen Drehung gesichert sind.

7. Einrichtung nach Anspruch 1, **dadurch gekennzeichnet**, daß die Mittel zum axialen Festspannen in an sich bekannter Weise durch eine Mutter, insbesondere eine Rändelmutter (6), gebildet sind, die auf das Gewindeende (5) einer eine Verlängerung der Welle (2) der Auswuchtmaschine (1) bildenden Stange (3) zur zentrischen Halterung eines aufgesteckten Rades (10) aufgeschraubt ist, wobei auf der Stange (3) in Spannrichtung vor der Mutter bzw. Rändelmutter (6) ein Zwischenstück (7) angeordnet ist, das radial entfernt von der Stange (3) Schultern (8) zur Anlage an einer Nabe (9) eines Rades (10) aufweist.

## Claims

1. Apparatus for the mounting of motorcycle wheels provided with brake discs onto the shaft of a balancing machine, the apparatus comprising means for central holding of the wheels, means for axial clamping of the wheels against an axial support, and means for non-rotatable connection of the wheels to the shaft of the balancing machine, characterised in that the axial support is formed by at least three support surface portions (18, 19) which are situated in a common radial plane and are distributed along the periphery, or an annular support surface situated in a radial plane, and that the means for axial clamping are formed by clamping jaws (21, 22) which can clamp in the direction to the support surface portions (18, 19) and together with these form a radially inwardly open mouth (18, 19, 20, 21, 22, 23, 24) for the accommodation of the rim of a brake disc (20) of a mounted wheel (10).

2. Apparatus according to Claim 1, characterised in that the support surface portions (18, 19) are formed on two support elements (13, 14) situated diametrally opposite each other with the same radial spacing.

3. Apparatus according to Claim 2, characterised in that the support elements (13, 14) are held radially displaceably by a wing-shaped part (4) which is, preferably releasably, connected to the shaft (2) of the balancing machine (1).

4. Apparatus according to Claim 3, characterised in that the support elements (13, 14) are disc-shaped and each has an axially extending carrier rod (15, 16) for engagement between the spokes (17) of a wheel (10), the carrier rods (15, 16) having the same radial spacing from the shaft (2) of the balancing machine (1).

5. Apparatus according to Claim 3, characterised in that the clamping jaws (21, 22) are provided with bores which are aligned with bores (25, 27; 26, 28) in the support elements (13, 14) and the wing-shaped part (4) and through which extend the bolts (29, 30), which have on their threaded ends, which project on the side of the wing-shaped part (4) facing away from the mounting side, hand nuts (31, 32), by means of which the clamping jaws (21, 22) may be clamped, via the bolts (29, 30), against the support surface portions (18, 19).

6. Apparatus according to Claim 5, characterised in that the clamping jaws (21, 22) are safeguarded by locating pins (33) against rotation.

7. Apparatus according to Claim 1, characterised in that the means for axial clamping are formed, in a manner known per se, by a nut, particularly knurled nut (6), which is screwed on the threaded end (5) of a rod (3), which forms an extension of the shaft (2) of the balancing machine (1) and serves for central holding of a mounted wheel (10), an intermediate piece (7) being situated on the rod (3) in the direction of clamping in front of the nut or a knurled nut (6), which piece has shoulders (8) which are spaced radially from the rod (3) and serve for bearing onto a hub (9) of a wheel (10).

## Revendications

1. Dispositif pour la fixation, sur l'arbre d'une machine d'équilibrage, de roues de motocycle munies de disques à frein, avec des moyens pour le support centré des roues, avec des moyens pour le blocage axial des roues contre un support axial et avec des moyens pour la liaison fixe en rotation des roues avec l'arbre de la machine d'équilibrage,
caractérisé en ce que le support axial est formé par au moins trois portions de surface de support (18, 19) disposées réparties sur la périphérie dans un plan radial commun ou une surface de support, de préférence annulaire, disposée dans un plan radial et que les moyens de blocage axial sont formés par des mâchoires de serrage (21, 22) qui peuvent être bloquées en direction des portions de surface de support (18, 19) et forment avec celles-ci un mors (18, 19, 21, 22, 23, 24) ouvert radialement vers l'intérieur pour recevoir le bord d'un disque à frein (20) d'une roue (10) fixée.

2. Dispositif selon la revendication 1,
caractérisé en ce que les portions de surface de support (18, 19) sont formées sur deux pièces de support (13, 14) diamétralement opposées au même écartement radial.

3. Dispositif selon la revendication 2,
caractérisé en ce que les pièces de support (13, 14) sont maintenues à déplacement radial par une pièce (4) en forme d'aile qui est reliée, de préférence de manière démontable, à l'arbre (2) de la machine d'équilibrage (1).

4. Dispositif selon la revendication 3,
caractérisé en ce que les pièces de support (13, 14) sont en forme de disque et présentent respectivement une tige d'entraînement (15, 16) dirigée axialement pour venir en prise entre les rayons (17) d'une roue (1O), les tiges d'entraînement (15, 16) ayant des écartements radiaux égaux par rapport à l'axe (2) de la machine d'équilibrage (1).

5. Dispositif selon la revendication 3,
caractérisé en ce que les mâchoires de freinage (21, 22) présentent des alésages qui sont alignés avec des alésages (25, 27; 26, 28) dans les pièces de support (13, 14) et la pièce (4) en forme d'aile et à travers lesquels sont enfoncés des boulons filetés (19, 30) qui présentent à leurs extrémités de filet, qui font saillie de la face de la pièce (4) en forme d'aile écartée du côté de serrage, des écrous à main (31, 32) par lesquels les mâchoires de serrage (21, 22) peuvent être serrées contre les portions de surface de support (18, 19) par l'intermédiaire des boulons filetés (29, 30).

6. Dispositif selon la revendication 5,
caractérisé en ce que les mâchoires de serrage (21, 22) sont fixées en rotation respectivement par des goujons d'assemblage (33).

7. Dispositif selon la revendication 1,
caractérisé en ce que les moyens de blocage axial sont formés de manière connue en soi par un écrou, en particulier un écrou moleté (6), qui est vissé sur l'extrémité de filet (5) d'une tige (3) formant un prolongement de l'arbre (2) de la machine d'équilibrage (1) pour le support centré d'une roue (10) emboîtée, une pièce intermédiaire (7) étant disposée sur la tige (3) devant l'écrou ou respectivement l'écrou moleté (6) dans le direction de serrage, laquelle présente des épaulements (8) écartés radialement de la tige (3) pour le support sur un moyeu (9) d'une roue (10)
